# EUROPÄISCHE PATENTSCHRIFT

(11) **EP 4 086 400 B1**
(45) Veröffentlichungstag und Bekanntmachung des Hinweises auf die Patenterteilung: **22.11.2023**
(21) Anmeldenummer: 21171967.9
(22) Anmeldetag: 04.05.2021
(51) Int. Cl.: E03F 7/12

(54) **KANALINSPEKTIONS- UND/ODER WARTUNGSSYSTEM**
CHANNEL INSPECTION AND/OR MAINTENANCE SYSTEM
SYSTÈME D'INSPECTION DE CANAL ET/OU DE MAINTENANCE

(43) Veröffentlichungstag der Anmeldung: 09.11.2022
(73) Patentinhaber: iPEK International GmbH, 87477 Sulzberg (DE)
(72) Erfinder: Endler, Hannes, 87439 Kempten (DE)
(74) Vertreter: 2s-ip Schramm Schneider Bertagnoll Patent- und Rechtsanwälte Part mbB

(56) Entgegenhaltungen:
- DE-U1-202011 100 462
- DE-U1-202014 105 998
- DE-U1-202015 101 277

## Beschreibung

### Gebiet der Erfindung

Die Erfindung betrifft ein Kanalinspektions- und/oder Wartungssystem, umfassend eine Basiseinheit und zumindest eine an der Basiseinheit anordenbare Systemkomponente, sowie ein Verfahren zum Ermitteln einer Konfiguration eines Kanalinspektions- und/oder Wartungssystems.

Kanalinspektions- und/oder Wartungssysteme sind aus dem Stand der Technik bekannt. Aus der DE 10 2012 108 500 A1 ist beispielsweise ein Kanalinspektionssystem bekannt, das einen Inspektionswagen umfasst, wobei an dem Inspektionswagen eine Kamera, eine Temperaturmessvorrichtung und mehrere Räder angeordnet sind. Ein Kanalinspektionssystem kann aber auch als Schiebesystem ausgestaltet sein, bei dem etwa die Kamera und verschiedene Messvorrichtungen an einer Schiebeeinheit angeordnet sind. An einem Fahrwagen eines Kanalinspektionssystems kann auch eine Hebeeinheit angeordnet sein, wie es etwa aus der DE 10 2011 015 080 A1 bekannt ist. An einer solchen Hebeeinheit können eine Kamera und gegebenenfalls Beleuchtungseinrichtungen angeordnet sein. Entsprechend können an dem Fahrwagen oder an der Schiebeeinheit auch Manipulatoren, etwas Greifer oder Fräsen angeordnet werden. Aus der DE 20 2014 105998 U1 und aus der DE 20 2015 101277 U1 sind weitere Systeme bekannt.

Es ist aus dem Stand der Technik also bekannt einen Fahrwagen bzw. eine Schiebeeinheit mit unterschiedlichen Systemkomponenten (Kameras, Sensoren, Manipulatoren, Räder, Hebeeinheiten, Fahrwagenerhöhungen, Verlängerungen für Hebeeinrichtungen, Ei-Profile, etc.) zu bestücken und diese Systemkomponenten bei Bedarf durch andere Systemkomponenten zu tauschen. Beispielsweise können die Räder eines Fahrwagens in Abhängigkeit vom Durchmesser des zu inspizierenden / zu wartenden Kanals mit unterschiedlichen Rädern bestückt werden.

Nachteilig hierbei ist allerdings, dass der Anwender / Bediener eines solchen Kanalinspektions- und/oder Wartungssystems vom System selbst keinerlei Rückmeldung erhält, mit welchen Systemkomponenten dieses aktuell bestückt ist. Das ist insbesondere dann nachteilig, wenn der Anwender bestimmte Systemkomponenten rein äußerlich nicht unterscheiden kann oder bestimmte Systemkomponenten im Inneren des Fahrwagengehäuses bzw. im Inneren der Schiebeeinheit angeordnet sind. So können beispielsweise am Fahrwagen Räder mit einer weichen Bereifung oder Räder mit einer harten Bereifung angeordnet werden, wobei sich diese Räder rein äußerlich nicht unterscheiden lassen.

Vor einem Wartungs- bzw. Inspektionsvorgang muss der Anwender daher die Konfiguration des Kanalinspektions- und/oder Wartungssystems aufwändig prüfen, um sicherzustellen, dass das System für den jeweiligen Vorgang korrekt konfiguriert ist. Hierbei können trotz größter Sorgfalt Fehler unterlaufen, da bestimmte Komponenten rein äußerlich nicht oder nicht leicht unterscheidbar sind, etwa die vorstehend genannten Räder mit unterschiedlich harter Bereifung. Das kann zur Folge haben, dass gegebenenfalls erst während eines Wartungs- bzw. Inspektionsvorganges erkannt wird, dass das System mit falschen bzw. nicht geeigneten Komponenten bestückt ist. Der Wartungs- bzw. Inspektionsvorgang kann sich hier aufgrund eines Umrüstens erheblich verzögern.

### Aufgabe der Erfindung

Aufgabe der vorliegenden Erfindung ist es daher, Lösungen bereitzustellen, die die aus dem Stand der Technik bekannten Nachteile zumindest teilweise vermeiden und die es ermöglichen, eine Konfiguration eines Kanalinspektions- und/oder Wartungssystems einfach, schnell und vor allem sicher zu ermitteln.

### Erfindungsgemäße Lösung

Gelöst wird diese Aufgabe mit den einem Kanalinspektions- und/oder Wartungssystem sowie ein Verfahren nach den unabhängigen Ansprüchen. Vorteilhafte Ausgestaltungen und Weiterbildungen der Erfindung sind in den jeweiligen abhängigen Ansprüchen angegeben.

Bereit gestellt wird demnach ein Kanalinspektions- und/oder Wartungssystem umfassend eine Basiseinheit und zumindest eine Systemkomponente, die an der Basiseinheit anordenbar ist, wobei
- an der Systemkomponente ein Transponder angeordnet ist, und
- an der Basiseinheit eine Leseeinrichtung angeordnet ist,
   wobei
- der Transponder angepasst ist die Systemkomponente identifizierende Daten bereitzustellen, und
- die Leseeinrichtung angepasst ist die von dem Transponder bereitgestellten Daten berührungslos von dem Transponder zu empfangen oder berührungslos aus dem Transponder auszulesen.

Die zumindest eine Systemkomponente kann hierbei direkt an der Basiseinheit angeordnet sein bzw. anordenbar sein. Die zumindest eine Systemkomponente kann aber auch indirekt an der Basiseinheit angeordnet sein bzw. anordenbar sein, d.h. zwischen der Systemkomponente und der Basiseinheit können weitere Komponenten oder Systemkomponenten angeordnet sein bzw. anordenbar sein.

Mit Hilfe der Leseeinrichtung und des Transponders, wobei an mehreren Systemkomponenten jeweils ein Transponder vorgesehen sein kann, wird es in vorteilhafter Weise ermöglicht, dass die Leseeinrichtung Daten der Transponder entgegennehmen kann und diese Daten dem Anwender zur Verfügung stellen kann. Anhand dieser Daten (d.h. die jeweilige Systemkomponente identifizierenden Daten) wird dem Anwender die Konfiguration des Kanalinspektions- und/oder Wartungssystems bereitgestellt, sodass der Anwender auch ohne Inaugenscheinnahme die aktuelle Konfiguration des Kanalinspektions- und/oder Wartungssystems prüfen kann.

Vorteilhaft ist es hierbei zudem, dass die komplette Konfiguration des Kanalinspektions- und/oder Wartungssystem auf einer Bedieneinheit bzw. Kontrolleinheit visualisiert werden kann. Dadurch kann vermieden werden, dass der Bediener die Konfiguration von Hand eingeben muss - Fehleingaben werden so effektiv vermieden. Zudem kann dem Bediener beispielsweise visualisiert werden, für welche Rohrdurchmesser die aktuelle Konfiguration des Kanalinspektions- und/oder Wartungssystems verwendbar ist.

Ein wesentlicher Vorteil der Erfindung liegt darin, dass zwischen der Systemkomponente und der Basiseinheit keine elektrische Verbindung bzw. Koppelung vorgesehen werden muss, um die Systemkomponente identifizierende Daten an die Basiseinheit zu übertragen. Damit kann eine aktuelle Konfiguration des Kanalinspektions- und/oder Wartungssystems auch dann vollständig ermittelt werden, wenn an der Basiseinheit auch rein mechanische Systemkomponenten angeordnet sind.

Vorteilhaft kann es hierbei sein, wenn die Leseeinrichtung die Daten eines Transponders unmittelbar nach der Anordnung bzw. Montage der jeweiligen Systemkomponente an der Basiseinheit auslesen und dem Anwender (zur Visualisierung auf der Bedieneinheit bzw. Kontrolleinheit) zur Verfügung stellen kann. Der Anwender kann so bereits während der Rüstzeit die Konfiguration der Basiseinheit prüfen bzw. überwachen und gegebenenfalls frühzeitig eingreifen, sollte eine falsche Systemkomponente an der Basiseinheit angeordnet werden.

Vorteilhaft ist es, wenn die Systemkomponenten lösbar an der Basiseinheit anordenbar sind. Einzelne Systemkomponenten können so bei Bedarf durch andere Systemkomponenten ausgetauscht oder ganz entfernt werden.

In einer Ausgestaltung der Erfindung kann es vorteilhaft sein, wenn
- das Kanalinspektions- und/oder Wartungssystem eine Kontrolleinheit umfasst, die außerhalb der Basiseinheit angeordnet ist,
- an der Basiseinheit eine Datenverarbeitungseinrichtung angeordnet ist, die mit der Leseeinrichtung gekoppelt ist, und
- die Datenverarbeitungseinrichtung angepasst ist, die von der Leseeinrichtung empfangenen oder ausgelesenen Daten zu empfangen und über eine Kommunikationsverbindung an die Kontrolleinheit zu übertragen.

Der Anwender kann so auch entfernt (remote) die aktuelle Konfiguration des Kanalinspektions- und/oder Wartungssystems prüfen.

In einer Ausgestaltung der Erfindung kann der Transponder zumindest eine Sensoreinrichtung aufweisen und/oder mit zumindest einer Sensoreinrichtung gekoppelt sein. Der Transponder ist hierbei weiter angepasst, Sensordaten der Sensoreinrichtung entgegenzunehmen und die entgegengenommenen Sensordaten der Leseeinrichtung bereitzustellen, und die Leseeinrichtung ist hierbei weiter angepasst, die von dem Transponder bereitgestellten Sensordaten berührungslos aus dem Transponder auszulesen. Damit kann nicht nur die aktuelle Konfiguration des Kanalinspektions- und/oder Wartungssystems ermittelt werden, sondern es können auch von den Sensoren der Systemkomponenten erfasste Sensordaten zusammen mit der Konfiguration des Kanalinspektions- und/oder Wartungssystems ermittelt werden. Vorteilhaft ist es hierbei, dass zusätzlich zur Konfiguration des Kanalinspektions- und/oder Wartungssystem auf der Bedieneinheit bzw. Kontrolleinheit auch die Sensordaten visualisiert werden können, wobei die Sensordaten spezifischen Systemkomponenten zugeordnet werden können. Die Zuordnung der Sensordaten zu der jeweiligen Systemkomponente kann etwa über eine die jeweilige Systemkomponente identifizierende eindeutige Kennung erfolgen.

In einer Ausgestaltung der Erfindung kann die Leseeinrichtung angepasst sein den Transponder mit elektrischer Energie zu versorgen.

In einer alternativen Ausgestaltung kann der Transponder angepasst sein die für seinen Betrieb benötigte elektrische Energie mittels Energie-Harvesting zu gewinnen.

In einer noch weiteren Ausgestaltung der Erfindung kann der Transponder mit einer Batterie oder einem Akkumulator zur Energieversorgung ausgestattet sein.

Die Kontrolleinheit kann angepasst sein, anhand der übertragenen Daten (d.h. anhand der von der Basiseinheit empfangenen Daten) eine Konfiguration der Basiseinheit mit der zumindest einen an der Basiseinheit angeordneten Systemkomponente zu identifizieren. Ferner kann die Kontrolleinheit angepasst sein, die Konfiguration der Basiseinheit mit der zumindest einen an der Basiseinheit angeordneten Systemkomponente zu visualisieren. Sofern Systemkomponenten über eine Sensoreinheit verfügen, kann die Kontrolleinheit weiter angepasst sein, auch Sensordaten der Sensoreinheiten zu visualisieren.

Die Basiseinheit kann einen Fahrwagen oder eine Schiebekamera umfassen.

Vorteilhaft kann es sein, wenn der Transponder innerhalb der Systemkomponente angeordnet ist.

In einer besonders vorteilhaften Ausgestaltung kann der Transponder gas- und/oder fluiddicht innerhalb der Systemkomponente angeordnet sein.

In einer Ausgestaltung der Erfindung kann der Transponder auch außen an der Systemkomponente angeordnet sein. "Außen" bedeutet hierbei, dass der Transponder an einer äußeren Oberfläche der Systemkomponente angeordnet bzw. an einer äu-βeren Oberfläche der Systemkomponente befestigt ist. Der Transponder kann hierbei ein Funketikett umfassen, das außen an der Systemkomponente befestigt, beispielsweise geklebt wird. Alternativ kann der Transponder hierbei auch als Transpondermodul ausgestaltet sein, das außen an der Systemkomponente befestigt, etwa angeschraubt wird. Ist der Transponder als Transpondermodul vorgesehen, kann es vorteilhaft sein, wenn dieses ein gas- und/oder fluiddichtes Gehäuse aufweist, in dem die elektronischen Komponenten des Transponders angeordnet sind.

Selbstverständlich können an der Basiseinheit auch Systemkomponenten angeordnet sein, wobei bei einigen Systemkomponenten der Transponder innerhalb der Systemkomponente und bei einigen Systemkomponenten der Transponder außen an der Systemkomponente angeordnet ist.

Bereit gestellt wird des Weiteren ein Verfahren zum Ermitteln einer Konfiguration eines Kanalinspektions- und/oder Wartungssystems, das eine Basiseinheit und zumindest eine Systemkomponente, die an der Basiseinheit angeordnet wird, umfasst, wobei an der Systemkomponente ein Transponder angeordnet ist bzw. die Systemkomponente einen Transponder aufweist und an der Basiseinheit eine Leseeinrichtung angeordnet ist,
wobei
- der Transponder Daten bereitstellt, die die Systemkomponente identifizieren, und
- die Leseeinrichtung die von dem Transponder bereitgestellten Daten berührungslos aus dem Transponder ausliest.

Vorteilhaft ist es, wenn die Systemkomponenten lösbar an der Basiseinheit angeordnet werden. Damit können die Systemkomponenten bei Bedarf ausgetauscht werden und die Konfiguration des Kanalinspektions- und/oder Wartungssystems geändert bzw. angepasst werden, wobei mittels der Transponder und der Leseeinrichtung die Konfiguration unmittelbar nach einem Wechsel der Systemkomponenten ermittelt werden kann.

In einer Ausgestaltung der Erfindung kann es vorteilhaft sein, wenn die Systemkomponenten aktivierbar sind bevor sie an der Basiseinheit angeordnet werden und/oder nachdem sie an der Basiseinheit angeordnet wurden. Dadurch kann zuverlässig vermieden werden, dass eine sich im Erfassungsbereich der Leseeinrichtung befindliche Systemkomponente (bzw. der Transponder der Systemkomponente), die nicht an der Basiseinheit angeordnet bzw. montiert ist, fälschlicherweise als an der Basiseinheit angeordnete bzw. montierte Systemkomponente erkannt wird (wenn beispielsweise ein Rad neben der Basiseinheit liegt und sich der Transponder dieses Rades im Erfassungsbereich der Leseeinrichtung befindet).

Zum Aktivieren der jeweiligen Systemkomponente können die Systemkomponente und/oder die Basiseinheit Aktivierungsmittel aufweisen, beispielweise:
- ein Reedkontakt im Transponder und ein Magnet in der Basiseinheit, wobei der Magnet über den Reedkontakt den Transponder aktiviert;
- ein Beschleunigungssensor in der Systemkomponente, der mit dem Transponder gekoppelt ist und der den Transponder aktiviert, wenn der Beschleunigungssensor eine vorbestimmte Geste bzw. Bewegung detektiert. Vorteilhaft kann es hierbei sein, wenn mehrere Systemkomponenten erst dann aktiviert werden, wenn die Beschleunigungssensoren dieser Systemkomponenten dieselbe Geste bzw. Bewegung detektieren, vorzugsweise innerhalb eines bestimmten Zeitraumes. Beispielsweise kann mit der Basiseinheit nach der Montage der Systemkomponenten eine Bewegung vollzogen werden, sodass alle Beschleunigungssensoren der montierten Systemkomponenten im Wesentlichen zeitgleich diese Bewegung detektieren. Die Beschleunigungssensoren der nicht an der Basiseinheit montierten Systemkomponenten detektieren diese Bewegung nicht und können so als "nicht-montierte" Systemkomponenten erkannt werden, auch wenn sich die Transponder dieser Systemkomponenten im Erfassungsbereich der Leseeinrichtung befinden.
- Je nach Ausgestaltung der Systemkomponente kann Aktivierungsmittel auch ein mechanischer Schalter oder dergleichen sein.

Die vorstehend genannten Aktivierungsmittel sind lediglich als beispielhafte Aktivierungsmittel zu verstehen. Je nach Systemkomponente und Ausgestaltung der Systemkomponente kann die Aktivierung auch auf andere Weise erfolgen. Erfindungswesentlich in einer Ausgestaltung der Erfindung ist, dass sich die Systemkomponenten aktivieren lassen, um zu gewährleisten, dass nicht an der Basiseinheit angeordnete Systemkomponenten fälschlicherweise als an der Basiseinheit angeordnete Systemkomponenten erkannt werden.

Das System kann eine Kontrolleinheit umfassen, die außerhalb der Basiseinheit angeordnet ist, und an der Basiseinheit kann eine Datenverarbeitungseinrichtung angeordnet sein, die mit der Leseeinrichtung gekoppelt ist, wobei die Datenverarbeitungseinrichtung die von der Leseeinrichtung empfangenen oder ausgelesenen Daten empfängt und über eine Kommunikationsverbindung an die Kontrolleinheit überträgt. Die Kommunikationsverbindung kann hierbei eine drahtgebundene oder drahtlose Kommunikationsverbindung sein.

Vorteilhaft kann es sein, wenn der Transponder zumindest eine Sensoreinrichtung aufweist und/oder mit zumindest einer Sensoreinrichtung gekoppelt ist, wobei der Transponder Sensordaten der Sensoreinrichtung bereitstellt und die Leseeinrichtung die von dem Transponder bereitgestellten Sensordaten berührungslos aus dem Transponder ausliest. Die Sensordaten können ebenfalls von der Datenverarbeitungseinrichtung über die Kommunikationsverbindung an die Kontrolleinheit übermittelt werden.

Die Leseeinrichtung kann den Transponder mit elektrischer Energie versorgen. Die Energieversorgung kann hierbei drahtlos erfolgen, beispielsweise auf induktiver Basis. Andere drahtlose Energieversorgungstechniken sind ebenfalls möglich.

In eine Ausgestaltung der Erfindung kann der Transponder einen Speicher zum Speichern elektrischer Energie aufweisen, etwa eine Batterie oder einen Akkumulator.

In einer noch weiteren Ausgestaltung der Erfindung kann der Transponder die für seinen Betrieb benötigte elektrische Energie mittels Energie-Harvesting gewinnen.

Vorteilhaft ist es, wenn die Kontrolleinheit anhand der übertragenen Daten eine Konfiguration der Basiseinheit mit der zumindest einen an der Basiseinheit angeordneten Systemkomponente identifiziert. Die Konfiguration der Basiseinheit kann an einer Anzeigeeinrichtung (z.B. ein Display) der Kontrolleinheit angezeigt werden. Die Kontrolleinheit kann ausgestaltet sein, eine Falschkonfiguration zu erkennen und einen entsprechenden Warnhinweis an der Anzeigeeinrichtung ausgeben. Eine Falschkonfiguration kann beispielswese sein, wenn von den vier montierten Rädern eines Fahrwagens ein Rad einen anderen Durchmesser aufweist als die übrigen Räder.

Bei der Systemkomponente bzw. bei den Systemkomponenten kann es sich handeln um: Fahrwagenräder, Hebeeinrichtungen, Abbiegeeinrichtungen, Kameramodule, Beleuchtungseinrichtung, Manipulatoren, Fahrwagenerhöhungen, Verlängerungen für Hebeeinrichtungen, Ei-Profile, oder dergleichen. Die genannten Systemkomponenten sind lediglich beispielhaft, wobei die Erfindung nicht hierauf beschränkt ist.

### Kurzbeschreibung der Figuren

Weitere Einzelheiten und Merkmale der Erfindungen sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: eine erste erfindungsgemäße Ausgestaltung eines Kanalinspektions- und/oder Wartungssystems mit einer als Fahrwagen ausgestalteten Basiseinheit und daran angeordneter Systemkomponenten;
- Fig. 2: eine zweite erfindungsgemäße Ausgestaltung eines Kanalinspektions- und/oder Wartungssystems mit einer als Schiebesystem ausgestalteten Basiseinheit und daran angeordneter Systemkomponenten;
- Fig. 3: eine Detailansicht einer Systemkomponente gemäß einer möglichen Ausgestaltung der Erfindung, und
- Fig. 4: drei Beispiele eines an der Systemkomponente angeordneten Transponders.

### Detaillierte Beschreibung der Erfindung

Nachfolgend werden Ausgestaltungen eines erfindungsgemäßen Kanalinspektions- und/oder Wartungssystems näher beschrieben. Das jeweilige Kanalinspektions- und/oder Wartungssystem wird hierbei jeweils auch als Inspektionssystem bezeichnet.

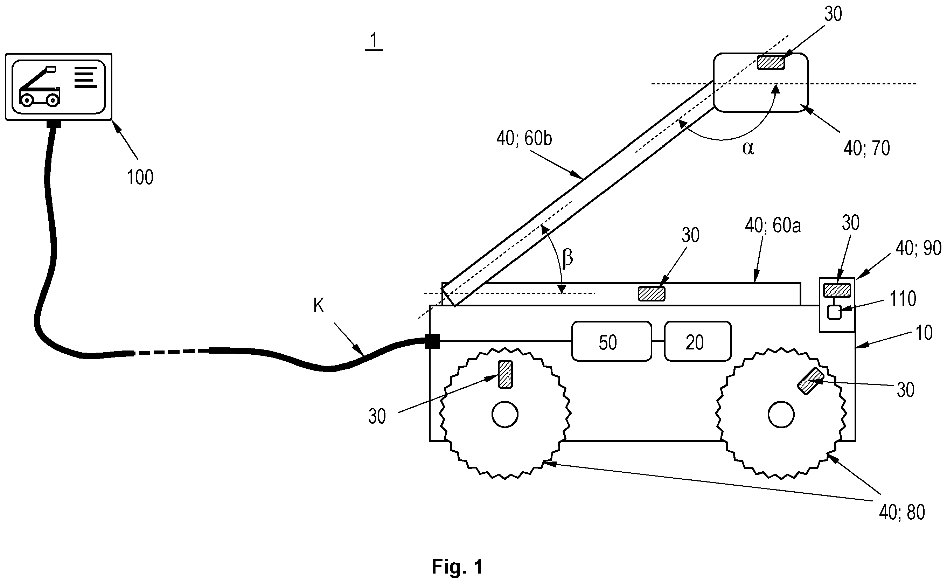

Fig. 1 zeigt eine erste erfindungsgemäße Ausgestaltung eines Kanalinspektions- und/oder Wartungssystems.

Das Inspektionssystem 1 umfasst hier eine als Fahrwagen ausgestaltete Basiseinheit 10 mit daran angeordneten Systemkomponenten 40, 60a, 60b, 70, 80, 90.

Die Basiseinheit 10 ist über eine Kommunikationsverbindung K mit einer Kontrolleinheit 100 gekoppelt, die in der Regel außerhalb des zu inspizierenden bzw. zu wartenden Kanals angeordnet ist. In Fig. 1 ist die Kommunikationsverbindung K als drahtgebundene Verbindung ausgestaltet. In einer Ausgestaltung der Erfindung kann die Kommunikationsverbindung K aber auch als drahtlose Verbindung ausgestaltet sen. Bei einer drahtgebundenen Kommunikationsverbindung kann es vorteilhaft sein, über das Kabel den Fahrwagen 10 mit elektrischer Energie zu versorgen. Bei einer drahtlosen Kommunikationsverbindung hat es sich als vorteilhaft erwiesen, den Fahrwagen 10 mit einer Batterie bzw. mit einem Akkumulator auszustatten - der Fahrwagen 10 kann so vollständig kabellos betrieben werden.

Die Kontrolleinheit 100 umfasst hier eine Anzeigeeinrichtung, an der die Basiseinheit 10 mit den daran angeordneten Systemkomponenten 40 visualisiert werden kann. Dem Anwender kann so die aktuelle Konfiguration des Inspektionssystems visualisiert werden, ohne dass er das Inspektionssystem selbst direkt in Augenschein nehmen muss. Der Anwender sieht dann auf einem Blick, ob das Inspektionssystem für die geplante Inspektion / Wartung korrekt konfiguriert ist.

Bei dem in Fig.1 gezeigten Beispiel sind an dem Fahrwagen 10 mehrere Systemkomponenten 40 angeordnet, nämlich eine Basis 60a bzw. Basiseinheit einer Hebeeinrichtung, ein Hebearm 60b der Hebeeinrichtung, eine Kamera 70, mehrere Fahrwagenräder 80, und eine Temperaturmesseinrichtung 90. Erfindungsgemäß können auch andere oder zusätzliche Systemkomponenten 40 an dem Fahrwagen 10 angeordnet werden.

Jede der Systemkomponenten weist erfindungsgemäß einen Transponder 30, etwa einen RFID-Transponder auf, wobei die Transponder 30 angepasst sind die jeweilige Systemkomponente 40 identifizierende Daten bereitzustellen. Beispielsweise können die Transponder 30 angepasst sein, für die jeweilige Systemkomponente eine eindeutige Kennung bereitzustellen.

An der Basiseinheit bzw. am Fahrwagen 10 ist eine Leseeinrichtung 20, etwa eine RFID-Leseeinrichtung angeordnet, mit der die von den Transpondern 30 der Systemkomponenten 40 bereitgestellten Daten berührungslos ausgelesen werden können. In einer Ausgestaltung der Erfindung kann die Leseeinrichtung die der jeweiligen Systemkomponente zugeordnete eindeutige Kennung von den RFID-Transpondern auslesen. Bei großen Fahrwägen 10 können auch mehrere Leseeinrichtungen 20 verteilt an dem Fahrwagen angeordnet sein, etwa dann, wenn das elektrische bzw. elektromagnetische Feld einer Leseeinrichtung 20 nicht weit genug reicht, um alle Transponder 30 zu erreichen.

Der Vorteil der erfindungsgemäßen Verwendung von kontaktlos auslesbaren Transpondern legt darin, dass keine elektrischen Steckverbindungen zwischen der jeweiligen Systemkomponenten und dem Fahrwagen vorgesehen werden müssen. Das verringert die Komplexität des Fahrwagens und der Systemkomponenten. Andererseits können die Systemkomponenten beliebig und flexibel am Fahrwagen angeordnet werden, ohne dass Rücksicht auf elektrische Steckverbindungen genommen werden muss. So kann etwa die in Fig. 1 gezeigte und als Temperaturmesseinrichtung ausgebildete Systemkomponente 90 an einem beliebigen Platz am Fahrwagen befestigt werden. Die als Räder 80 ausgestalteten Systemkomponenten können in gewohnter Weise an den Radachsen des Fahrwagens montiert werden, ohne dass irgendwelche elektrischen Verbindungen berücksichtigt werden müssen. Das Vermeiden solcher elektrischer Kontakte hat zudem den Vorteil, dass die Anzahl verschleißanfälliger und zu wartender Komponenten reduziert wird bzw. gering gehalten werden.

Ein weiterer Vorteil der erfindungsgemäßen Transponder liegt darin, dass Verschmutzungen keinen Einfluss darauf haben, die aktuelle Konfiguration des Fahrwagens ermitteln zu können, denn Verschmutzungen können insbesondere bei Kanalinspektions- und Wartungssystemen ein erheblich Problem darstellen.

Ein noch weiterer und wesentlicher Vorteil liegt darin, dass sowohl die Transponder 30, als auch die Leseeinrichtung 20 hermetisch geschützt in den jeweiligen Systemkomponenten 40 bzw. im Fahrwagen untergebracht werden können. Der Verschleiß und äußere Einflüsse, wie sie insbesondere in Kanälen vorkommen, können so deutlich reduziert und damit die Lebensdauer der Transponder deutlich erhöht werden. Die Transponder können beispielsweise in einem hermetischen, d.h. gas- und fluiddichten Gehäuse untergebracht werden.

Bei den in den Systemkomponenten 40 enthaltenen Transpondern 30 kann es sich um aktive oder passive Transponder handeln. Bei passiven Transpondern, etwa RFID- Transpondern wird mittels des von der Leseeinrichtung 20 erzeugten elektromagnetischen Feldes der Transponder mit Energie versorgt und die Übertragung der Daten vom Transponder zur Leseeinrichtung abgewickelt. Bei aktiven Transpondern kann die Energieversorgung des Transponders mit einer eigenen Stromversorgung erfolgen, etwa mit einer dem Transponder zugeordneten Batterie.

Die von der Leseeinrichtung 20 aus den einzelnen Transpondern 30 ausgelesenen Kennungen (Daten) der Systemkomponenten 40 werden über die Kommunikationsverbindung K drahtlos oder drahtgebunden an die Kontrolleinheit 100 übertragen. Die Übertragung der Daten wird vorzugsweise von einer Datenverarbeitungseinrichtung 50 übernommen, die ebenfalls in der Basiseinheit 10 bzw. im Fahrwagen angeordnet ist. Die Datenverarbeitungseinrichtung 50 ist mit der Leseeinrichtung 20 gekoppelt und ist angepasst, die von der Leseeinrichtung bereitgestellten Daten, d.h., die Daten, die die Leseeinrichtung 20 von den jeweiligen Transpondern 30 ausgelesen hat, aufzubereiten und an die Kontrolleinheit 100 zu übertragen. Das Aufbereiten der Daten durch die Datenverarbeitungseinrichtung 50 kann etwa das Aufbereiten gemäß einem vorbestimmten Übertragungsprotokoll umfassen.

In einer Ausgestaltung der Erfindung kann die Datenverarbeitungseinrichtung 50 mit einer Speichereinrichtung 130 gekoppelt sein, um die Daten der Leseeinrichtung zu speichern, etwa wenn eine Übertragung der Daten zur Kontrolleinheit nicht möglich ist.

Die Datenverarbeitungseinrichtung 50 kann in einer Ausgestaltung der Erfindung angepasst sein, die Montage von Systemkomponenten 40 zu überwachen und bei eine fehlerhaften Montage den Arbeiter zu informieren, etwa mittels eines optischen oder akustischen Signals. Hierzu können in der Datenverarbeitungseinrichtung 50 oder in der Speichereinrichtung 130 eine Anzahl möglicher bzw. zulässiger Konfigurationen des Fahrwagens hinterlegt sein. Die Datenverarbeitungseinrichtung 50 und die Speichereinrichtung 130 können als integrale Einheit ausgestaltet sein. Bei einer Montage einer Systemkomponente kann die Datenverarbeitungseinrichtung dann einen Abgleich mit den hinterlegten Konfigurationen durchführen und den Arbeiter ggf. informieren. Das ist insbesondere dann Vorteilhaft, wenn verschiedene Systemkomponenten rein äußerlich nicht oder nur sehr schwer zu unterscheiden sind. So können zwei Räder mit unterschiedlicher Härte der Bereifung optisch nahezu identisch aussehen, sie dürfen aber an einem Fahrwagen nicht zusammen oder einer der beiden Räder an dem spezifischen Fahrwagen gar nicht verwendet werden. Würde der Arbeiter nun das (nicht zulässige) Rad an dem Fahrwagen anbringen, kann die Leseeinrichtung 20 die Kennung des Rades auslesen und die Datenverarbeitungseinrichtung kann für diese Kennung einen entsprechenden Abgleich vornehmen. Vorteilhaft hierbei ist, dass bereits während der Rüstzeit die Konfiguration auf einfache Weise überwacht werden kann und so spätere Umrüstungen vermieden werden, etwa wenn der Fahrwagen für das Umrüsten erst aus dem Kanal genommen werden muss.

Vorteilhaft kann es sein, wenn die Transponder nicht nur eine Kennung der jeweiligen Systemkomponente 40 bereitstellen, sondern auch weitere Daten, die von der Leseeinrichtung abgefragt werden können. Bei diesen weiteren Daten kann es sich beispielsweise um Sensordaten handeln. Fig. 1 zeigt ein Beispiel einer so ausgebildeten Systemkomponente 40, nämlich die Systemkomponente 90, die als Temperaturmesseinrichtung ausgebildet ist. Die Temperaturmesseinrichtung 90 weist einen Transponder 30 und einen Temperatursensor 110 auf. Der Temperatursensor 110 ist derart mit dem Transponder 30 operativ gekoppelt, dass die Leseeinrichtung 20 neben der Kennung des Transponders (bzw. der Kennung der Systemkomponente 90) auch den vom Temperatursensor bereitgestellten Messwert aus dem Transponder auslesen kann.

Ein weiteres Beispiel solcher weiterer Daten sind der Winkel α zwischen der als Kamera ausgebildeten Systemkomponente 70 und der als Hebearm ausgebildeten Systemkomponente 60b. In der Kamera 70 (bzw. in oder an dem Kameragehäuse) kann ein Winkelsensor angeordnet sein, der den Winkel α zwischen dem Hebearm 60b und z.B. der optischen Achse der Kamera 70 misst, und der operativ mit dem Transponder 30 der Kamera 70 gekoppelt ist. In entsprechender Weise kann mit Hilfe einer Winkelmesseinrichtung auch der Winkel β zwischen dem Hebearm 60b und der Basiseinheit 60a ermittelt werden und über den in der Basiseinheit 60a angeordneten Transponder 30 der Leseeinrichtung zum Auslesen aus dem Transponder zur Verfügung gestellt werden.

Die Transponder 30 der als Räder 80 ausgestalteten Systemkomponenten 40 können beispielsweise jeweils operativ mit einem Reifendrucksensor gekoppelt sein, sodass die Leseeinrichtung 20 über die Transponder 30 auch den Reifendruck des jeweiligen Rades auslesen kann.

Zusätzlich zu den Kennungen der Transponder bzw. der Systemkomponenten kann die Datenverarbeitungseinrichtung 50 auch diese weiteren Daten an die Kontrolleinheit 100 übertragen, wo sie gegebenenfalls visualisiert werden können.

Die Kennungen der Systemkomponenten und die weiteren Daten können zum Zwecke einer lückenlosen Dokumentation einer Kanalinspektion bzw. einer Kanalwartung in der Kontrolleinheit 100 oder auch in der Speichereinrichtung 130 des Fahrwagens gespeichert werden. Hierzu kann die Leseeinrichtung 20 angepasst sein, die Kennungen der Transponder und gegebenenfalls die weiteren Daten in regelmäßigen zeitlichen Abständen (z.B. alle 5 Minuten) abzufragen und in der Speichereinrichtung 130 zu speichern oder an die Kontrolleinheit 100 zu übertragen.

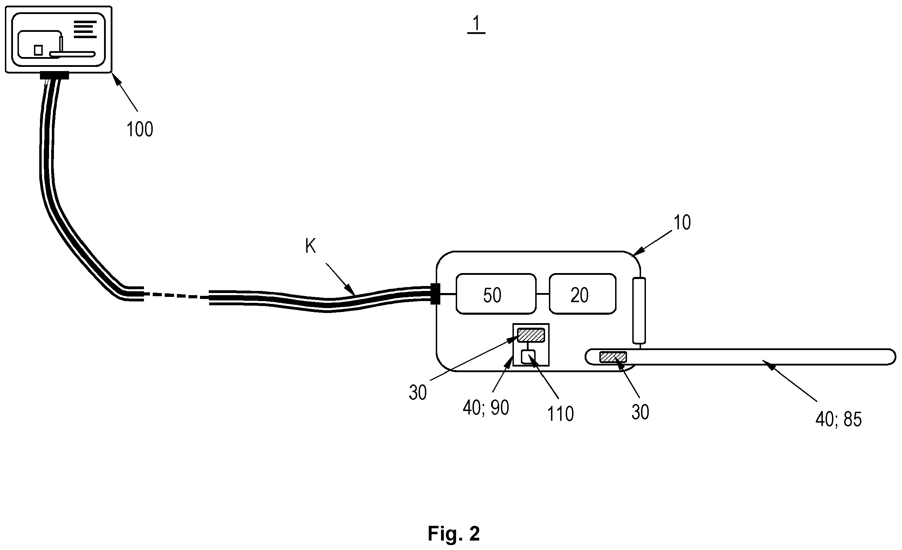

**Fig. 2** zeigt eine zweite erfindungsgemäße Ausgestaltung eines Kanalinspektions- und/oder Wartungssystems.

Das Inspektionssystem 1 umfasst hier eine als Schiebesystem ausgestaltete Basiseinheit 10 mit daran angeordneten Systemkomponenten 40, 85, 90.

Die Basiseinheit 10 wird mittels eines Schiebekabels bzw. eines Schiebeaals in dem Kanal vorgeschoben. In dem Schiebeaal kann die Kommunikationsverbindung K zischen der Basiseinheit 10 und der Kontrolleinheit 100 ausgebildet sein, falls es sich um eine drahtgebundene Kommunikationsverbindung K handelt. Die Kommunikationsverbindung K kann aber auch als drahtlose Verbindung ausgestaltet sein.

Bei dem in Fig. 2 gezeigten Beispiel eines Schiebesystems sind an der Basiseinheit 10 mehrere Systemkomponenten 40 angeordnet, nämlich eine Kamera 70, ein Abbiegestäbchen 85 und eine Temperaturmesseinrichtung 90. Diese drei Systemkomponenten sind vorzugsweise lösbar an der Basiseinheit 10 angeordnet und weisen jeweils einen Transponder 30 auf.

An der Basiseinheit 10 ist zudem eine Leseeinrichtung 20 angeordnet, mit der die eindeutigen Kennungen der Systemkomponenten 40 bzw. der jeweiligen Transponder 40 abgefragt werden können. Die Leseeinrichtung 20 kann auch hier die abgefragten Kennungen einer Datenverarbeitungseinrichtung 50 zur Verfügung stellen, die diese dann, gegebenenfalls nach einer Aufbereitung, über die Kommunikationsverbindung K an die Kontrolleinheit 100 überträgt.

Wie vorstehend zu Fig. 1 erläutert, können auch die in Fig. 2 gezeigten Systemkomponenten 40 Sensoreinrichtungen 110 aufweisen, die weitere Daten zur Abfrage durch die Leseeinrichtung 20 bereitstellen können. Gezeigt ist in Fig. 2 eine als Temperaturmesseinrichtung 90 ausgebildete Systemkomponente, die über einen Temperatursensor verfügt.

Auch die als Abbiegestäbchen 85 ausgebildete Systemkomponente kann über einen Sensor verfügen, etwa über einen in Fig. 2 nicht gezeigten Winkelsensor, mit dem der Winkel zwischen dem Gehäuse der Basiseinheit und dem Abbiegestäbchen ermittelt werden kann.

Die Funktionsweise der Leseeinrichtung 20 und der Transponder 30 entspricht der vorstehend zu Fig. 1 beschriebenen Funktionsweise.

Es können auch andere bzw. zusätzliche Sensoren vorgesehen sein, dessen Sensordaten mittels der Transponder und Leseeinrichtung abgefragt werden können. Beispielsweise können Kraftsensoren vorgesehen sein, mit denen die auf das Abbiegestäbchen 85 wirkenden Kräfte oder mit denen die auf das Schiebekabel oder andere Kabel wirkenden Zugkräfte gemessen werden können.

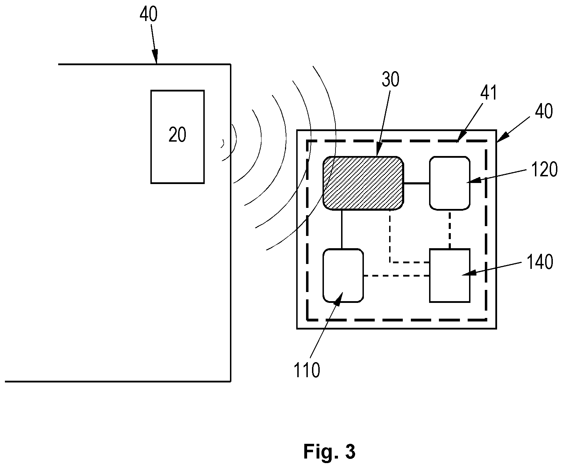

**Fig. 3** zeigt beispielshaft eine Detailansicht einer Systemkomponente als Blockschaltbild gemäß einer möglichen Ausgestaltung der Erfindung.

Die Systemkomponente 40 umfasst bei dem hier gezeigten Beispiel:
- einen Transponder 30, der gemäß einer Ausgestaltung der Erfindung als RFID-Transponder ausgestaltet ist,
- eine Sensoreinrichtung 110, die optional vorhanden sein kann,
- eine Speichereinrichtung 120, die ebenfalls optional vorhanden sein kann, und
- eine Stromversorgung 140, die ebenfalls optional vorhanden sein kann.

Der Transponder 30 ist hier operativ mit der Sensoreinrichtung 110 verbunden, wobei die von der Sensoreinrichtung 110 ermittelten Messwerte dem Transponder 30 als Messdaten zur Verfügung gestellt werden.

Der Transponder 30 ist hier ferner operativ mit einer Speichereinrichtung 120 gekoppelt. Die Speichereinrichtung kann vorgesehen sein, die Messwerte der Sensoreinrichtung 110 zu speichern bzw. zwischen zu speichern. Die Speichereinrichtung 120 kann aber auch die Kennung des der Systemkomponente 40 bzw. des Transponders 30 speichern.

Ferner ist der Transponder 30 hier mit einer Stromversorgung 140 gekoppelt. Die Stromversorgung kann zudem mit der Sensoreinrichtung 110 und/oder der Speichereinrichtung 120 gekoppelt sein. Die Stromversorgung kann als Batterie oder als Akkumulator ausgestaltet sein. Mit einer entsprechenden Elektronik kann der Akkumulator aus dem elektrischen Feld der Leseeinrichtung 20 die für das Laden des Akkumulators notwendige Energie beziehen. Die Energieversorgung 140 ist insbesondere dann vorteilhaft, wenn der Transponder 30 nur in zeitlichen Abständen abgefragt wird, die Messwerte der Sensoreinrichtung aber fortlaufend (d.h. in kleineren zeitlichen Abständen) erfasst werden sollen. Die Messwerte können dann bis zum nächsten Abfragen in der Speichereinrichtung zwischengespeichert werden.

Die Komponenten 30, 110, 120 und 140 können als integrales Transpondermodul 41 ausgestaltet sein. So ein Transpondermodul kann dann einfach an einer Systemkomponente 40 angeordnet bzw. befestigt werden.

Alternativ kann das Transpondermodul 41 auch nur den Transponder 30 und die Speichereinrichtung 120 aufweisen. Das Transpondermodul kann dann eine oder mehrere Schnittstellen aufweisen, über die eine oder mehrere Sensoreinrichtungen an dem Transpondermodul 41 angeschlossen werden können.

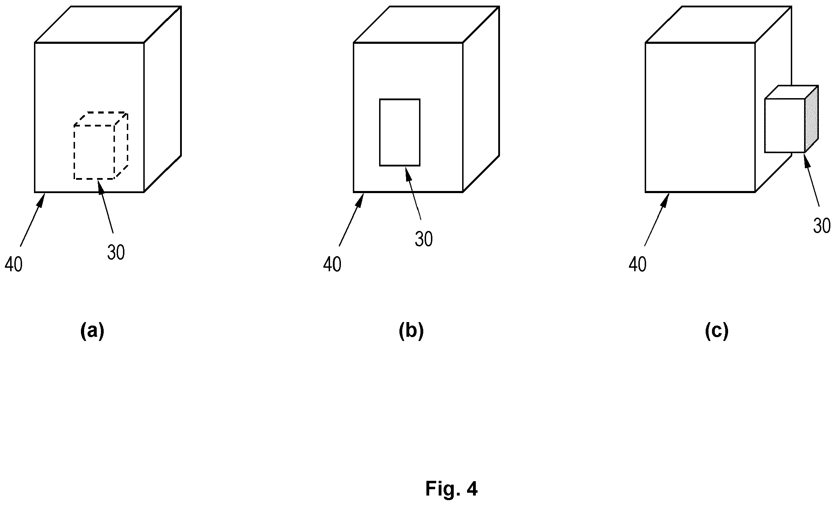

Fig. 4 zeigt drei Beispiele eines an der Systemkomponente angeordneten Transponders, sowohl die Systemkomponente als auch der Transponder hier jeweils lediglich schematisch dargestellt sind.

Abbildung (a) der Fig. 4 zeigt eine Systemkomponente 40, bei der der Transponder 30 innerhalb der Systemkomponente 40 angeordnet ist. Die Systemkomponente 40 kann hierbei ein Gehäuse umfassen, innerhalb dessen der Transponder 30 angeordnet ist. In einer Ausgestaltung der Erfindung kann das Gehäuse der Systemkomponente 40 fluid- und oder gasdicht ausgestaltet sein. Der Transponder 30 selbst kann ebenfalls ein Gehäuse umfassen, innerhalb dessen die elektronischen Komponenten des Transponders angeordnet sind. Das Gehäuse des Transponders kann gas- und/oder fluiddicht ausgestaltet sein.

Abbildung (b) der Fig. 4 zeigt eine Systemkomponente 40, bei der der Transponder 30 außen an der Systemkomponente 40 angeordnet ist. Der Transponder 30 ist hier als Funketikett ausgestaltet, dass an einer Außenseite der Systemkomponente 40 befestigt ist, beispielsweise an einer Gehäusewandung der Systemkomponente aufgeklebt ist. Ein als Funketikett ausgestalteter Transponder kann auch innerhalb der Systemkomponente angeordnet werden, wie in Abbildung (a) der Fig. 4 gezeigt.

Abbildung (c) der Fig. 4 zeigt eine Systemkomponente 40, bei der der Transponder 30 außen an der Systemkomponente 40 angeordnet ist. Der Transponder 30 ist hierbei als Transpondermodul ausgestaltet, das außen an der Systemkomponente 40 aufgeschraubt oder anderweitig mechanisch befestigt ist. Das Transpondermodul kann ein fluid- und/oder gasdichtes Gehäuse umfassen, in dem die elektronischen Komponenten des Transponders angeordnet sind.

Vorstehend wurden Ausführungsbeispiele der Erfindung genannt, in denen der Transponder als RFID-Transponder und die Leseeinrichtung als RFID-Leseeinrichtung ausgestaltet ist. Die Erfindung ist allerdings nicht auf die RFID-Technologie beschränkt. Vielmehr können auch andere Funktechnologien verwendet werden, beispielsweise Bluetooth, Bluetooth Low Energy, ZigBee oder NFC.

Die Erfindung bringt mehrere Vorteile mit sich. Zunächst können beliebige Systemkomponenten mit einem Transponder bzw. mit einem Transpondermodul versehen werden. Bei Anordnen einer Systemkomponente an die Basiseinheit kann die Leseeinrichtung die Kennung des Transponders und gegebenenfalls weitere Daten (z.B. Sensordaten) auslesen. Anhand der Kennungen und gegebenenfalls der weiteren Daten wird es möglich, die aktuelle Konfiguration des Kanalinspektions- und/oder Wartungssystems dem Anwender zu präsentieren, beispielsweise an einer Anzeigeeinrichtung einer Kontrolleinheit zu visualisieren. Der Anwender kann so unabhängig von einer physischen Inaugenscheinnahme die Konfiguration des Kanalinspektions- und/oder Wartungssystems prüfen und zwar nicht nur vor einem Inspektions- und/oder Wartungsvorgang sondern während des gesamten Inspektions- und/oder Wartungsvorganges. Besonders vorteilhaft ist hierbei, dass zwischen der Systemkomponente und der Basiseinheit keine elektrische Verbindung bzw. Koppelung (etwa Kabel oder Stecker) vorgesehen werden muss.

### Bezugszeichen:

- 1: Kanalinspektions- und/oder Wartungssystem
- 10: Basiseinheit, z.B. Fahrwagen oder Schiebesystem
- 20: Leseeinrichtung
- 30: Transponder
- 40: Systemkomponente
- 41: Transpondermodul
- 50: Datenverarbeitungseinrichtung
- 60a: Systemkomponente, z.B. Basis einer Hebeeinrichtung
- 60b: Systemkomponente, z.B. Hebearm einer Hebeeinrichtung
- 70: Systemkomponente, z.B. Kamera
- 80: Systemkomponente, z.B. Fahrwagenräder
- 85: Systemkomponente, z.B. Abbiegestäbchen
- 90: Systemkomponente, z.B. Temperaturmesseinrichtung
- 100: Kontrolleinheit
- 110: Sensoreinrichtung (optional)
- 120: Speichereinrichtung der Systemkomponente 40 (optional)
- 130: Speichereinrichtung der Basiseinheit 10 (optional)
- 140: Stromversorgung (z.B. Akkumulator, optional)
- K: Kommunikationsverbindung, drahtlos oder drahtgebunden

## Patentansprüche

1. Kanalinspektions- und/oder Wartungssystem (1) umfassend eine Basiseinheit (10) und zumindest eine Systemkomponente (40), die an der Basiseinheit (10) anordenbar ist, wobei
- an der Systemkomponente (40) ein kontaktlos auslesbarer Transponder (30) angeordnet ist, und
- an der Basiseinheit (10) eine Leseeinrichtung (20) angeordnet ist,
wobei
- der Transponder (30) angepasst ist die Systemkomponente (40) identifizierende Daten bereitzustellen, und
- die Leseeinrichtung (20) angepasst ist die von dem Transponder (30) bereitgestellten Daten berührungslos aus dem Transponder (30) auszulesen.

2. System nach Anspruch 1, wobei die Systemkomponenten (40) lösbar an der Basiseinheit (10) anordenbar sind.

3. System nach Anspruch 1, wobei
- das System eine Kontrolleinheit (100) umfasst, die außerhalb der Basiseinheit (10) angeordnet ist,
- an der Basiseinheit (10) eine Datenverarbeitungseinrichtung (50) angeordnet ist, die mit der Leseeinrichtung (20) gekoppelt ist,
- die Datenverarbeitungseinrichtung (50) angepasst ist, die von der Leseeinrichtung (20) empfangenen oder ausgelesenen Daten zu empfangen und über eine Kommunikationsverbindung (K) an die Kontrolleinheit (100), zu übertragen.

4. System nach Anspruch 1, wobei der Transponder (30) zumindest eine Sensoreinrichtung (110) aufweist und/oder mit zumindest einer Sensoreinrichtung (110) gekoppelt ist, wobei der Transponder (30) weiter angepasst ist Sensordaten der Sensoreinrichtung (110) bereitzustellen und wobei die Leseeinrichtung (20) angepasst ist die von dem Transponder (30) bereitgestellten Sensordaten berührungslos von dem Transponder (30) zu empfangen oder berührungslos aus dem Transponder (30) auszulesen.

5. System nach Anspruch 1, wobei die Leseeinrichtung (20) angepasst ist den Transponder (30) mit elektrischer Energie zu versorgen.

6. System nach Anspruch 1, wobei der Transponder (30) angepasst ist die für seinen Betrieb benötigte elektrische Energie mittels Energie-Harvesting zu gewinnen oder wobei der Transponder mit einer Batterie oder einem Akkumulator zur Energieversorgung ausgestattet ist.

7. System nach Anspruch 3, wobei die Kontrolleinheit (100) angepasst ist, anhand der übertragenen Daten eine Konfiguration der Basiseinheit (10) mit der zumindest einen an der Basiseinheit angeordneten Systemkomponente (40) zu identifizieren.

8. System nach Anspruch 1, wobei die Basiseinheit (10) ein Fahrwagen oder eine Schiebekamera umfasst.

9. System nach Anspruch 1, wobei der Transponder (30) innerhalb der Systemkomponente (40) angeordnet ist oder wobei der Transponder (30) außen an der Systemkomponente (40) angeordnet ist.

10. Verfahren zum Ermitteln einer Konfiguration eines Kanalinspektions- und/oder Wartungssystems (1), das eine Basiseinheit (10) und zumindest eine Systemkomponente (40), die an der Basiseinheit (10) angeordnet wird, umfasst, wobei an der Systemkomponente (40) ein kontaktlos auslesbarer Transponder (30) angeordnet ist und an der Basiseinheit (10) eine Leseeinrichtung (20) angeordnet ist,
wobei
- der Transponder (30) Daten bereitstellt, die die Systemkomponente (40) identifizieren, und
- die Leseeinrichtung (20) die von dem Transponder (30) bereitgestellten Daten berührungslos aus dem Transponder (30) ausliest.

11. Verfahren nach Anspruch 10, wobei die Systemkomponenten (40) lösbar an der Basiseinheit (10) angeordnet wird.

12. Verfahren nach Anspruch 10, wobei das System eine Kontrolleinheit (100) umfasst, die außerhalb der Basiseinheit (10) angeordnet ist, und an der Basiseinheit (10) eine Datenverarbeitungseinrichtung (50) angeordnet ist, die mit der Leseeinrichtung (20) gekoppelt ist, wobei die Datenverarbeitungseinrichtung (50) die von der Leseeinrichtung (20) empfangenen oder ausgelesenen Daten empfängt und über eine Kommunikationsverbindung (K) an die Kontrolleinheit (100) überträgt.

13. Verfahren nach Anspruch 10, wobei der Transponder (30) zumindest eine Sensoreinrichtung (110) aufweist und/oder mit zumindest einer Sensoreinrichtung (110) gekoppelt ist, wobei der Transponder (30) Sensordaten der Sensoreinrichtung (110) bereitstellt und die Leseeinrichtung (20) die von dem Transponder (30) bereitgestellten Sensordaten berührungslos von dem Transponder (30) empfängt oder berührungslos aus dem Transponder (30) ausliest.

14. Verfahren nach Anspruch 10, wobei die Leseeinrichtung (20) den Transponder (30) mit elektrischer Energie versorgt.

15. Verfahren nach Anspruch 10, wobei der Transponder (30) die für seinen Betrieb benötigte elektrische Energie mittels Energie-Harvesting gewinnt oder wobei der Transponder mit einer Batterie oder einem Akkumulator mit elektrischer Energie versorgt wird.

16. Verfahren nach Anspruch 12, wobei die Kontrolleinheit (100) anhand der übertragenen Daten eine Konfiguration der Basiseinheit (10) mit der zumindest einen an der Basiseinheit angeordneten Systemkomponente (40) identifiziert.

## Claims

1. Sewer inspection and/or maintenance system (1) comprising a base unit (10) and at least one system component (40) which can be arranged on the base unit (10), wherein
- a transponder (30) which can be contactlessly read out is arranged on the system component (40), and
- a reading device (20) is arranged on the base unit (10), wherein
- the transponder (30) is adapted to provide the data identifying the system component (40), and
- the reading device (20) is adapted to contactlessly read out the data provided by the transponder (30) from the transponder (30).

2. System according to claim 1, wherein the system components (40) can be detachably arranged on the base unit (10).

3. System according to claim 1, wherein
- the system comprises a control unit (100) which is arranged outside the base unit (10),
- a data processing device (50) which is coupled to the reading device (20) is arranged on the base unit (10),
- the data processing device (50) is adapted to receive the data received or read out by the reading device (20) and to transmit said data to the control unit (100) via a communication connection (K).

4. System according to claim 1, wherein the transponder (30) has at least one sensor device (110) and/or is coupled to at least one sensor device (110), wherein the transponder (30) is further adapted to provide sensor data from the sensor device (110), and wherein the reading device (20) is adapted to contactlessly receive the sensor data provided by the transponder (30) from the transponder (30) or to contactlessly read out said data from the transponder (30).

5. System according to claim 1, wherein the reading device (20) is adapted to supply the transponder (30) with electrical energy.

6. System according to claim 1, wherein the transponder (30) is adapted to obtain the electrical energy required for its operation by means of energy harvesting, or wherein the transponder is equipped with a battery or an accumulator for energy supply.

7. System according to claim 3, wherein the control unit (100) is adapted to identify, based on the transmitted data, a configuration of the base unit (10) with the at least one system component (40) arranged on the base unit.

8. System according to claim 1, wherein the base unit (10) comprises a carriage or a sliding camera.

9. System according to claim 1, wherein the transponder (30) is arranged within the system component (40) or wherein the transponder (30) is arranged outside of the system component (40).

10. Method for determining a configuration of a sewer inspection and/or maintenance system (1), which comprises a base unit (10) and at least one system component (40) which is arranged on the base unit (10), wherein a transponder (30) which can be contactlessly read out is arranged on the system component (40) and a reading device (20) is arranged on the base unit (10),
wherein
- the transponder (30) provides data identifying the system component (40), and
- the reading device (20) contactlessly reads out the data provided by the transponder (30) from the transponder (30).

11. Method according to claim 10, wherein the system components (40) are detachably arranged on the base unit (10).

12. Method according to claim 10, wherein the system comprises a control unit (100) which is arranged outside the base unit (10) and a data processing device (50) is arranged on the base unit (10), said data processing device being coupled to the reading device (20), wherein the data processing device (50) receives the data received or read out from the reading device (20) and transmits it to the control unit (100) via a communication connection (K).

13. Method according to claim 10, wherein the transponder (30) has at least one sensor device (110) and/or is coupled to at least one sensor device (110), wherein the transponder (30) provides sensor data from the sensor device (110) and the reading device (20) receives the sensor data provided by the transponder (30) from the transponder (30) or contactlessly reads out said data from the transponder (30).

14. Method according to claim 10, wherein the reading device (20) supplies the transponder (30) with electrical energy.

15. Method according to claim 10, wherein the transponder (30) obtains the electrical energy required for its operation by means of energy harvesting or wherein the transponder is supplied with electrical energy using a battery or an accumulator.

16. Method according to claim 12, wherein the control unit (100) identifies, based on the transmitted data, a configuration of the base unit (10) with the at least one system component (40) arranged on the base unit.

## Revendications

1. Système d'inspection de canalisations et/ou de maintenance (1) comprenant une unité de base (10) et au moins un composant de système (40) pouvant être disposé sur l'unité de base (10), dans lequel
- un transpondeur (30) lisible sans contact est disposé sur le composant de système (40), et
- un dispositif de lecture (20) est disposé sur l'unité de base (10),
dans lequel
- le transpondeur (30) est adapté pour fournir des données identifiant le composant de système (40), et
- le dispositif de lecture (20) est adapté pour lire sans contact, depuis le transpondeur (30), les données fournies par le transpondeur (30).

2. Système selon la revendication 1, dans lequel les composants de système (40) peuvent être disposés de manière amovible sur l'unité de base (10).

3. Système selon la revendication 1, dans lequel
- le système comprend une unité de commande (100) disposée à l'extérieur de l'unité de base (10),
- un dispositif de traitement de données (50) couplé au dispositif de lecture (20) est disposé sur l'unité de base (10),
- le dispositif de traitement de données (50) est adapté pour recevoir les données reçues ou lues par le dispositif de lecture (20) et pour les transmettre à l'unité de commande (100) par l'intermédiaire d'une liaison de communication (K).

4. Système selon la revendication 1, dans lequel le transpondeur (30) présente au moins un dispositif capteur (110) et/ou est couplé à au moins un dispositif capteur (110), dans lequel le transpondeur (30) est en outre adapté pour fournir des données de capteur du dispositif capteur (110) et dans lequel le dispositif de lecture (20) est adapté pour recevoir sans contact, en provenance du transpondeur (30), les données de capteur fournies par le transpondeur (30) ou pour lire sans contact lesdites données depuis le transpondeur (30).

5. Système selon la revendication 1, dans lequel le dispositif de lecture (20) est adapté pour alimenter le transpondeur (30) en énergie électrique.

6. Système selon la revendication 1, dans lequel le transpondeur (30) est adapté pour produire, au moyen d'une technologie de récupération d'énergie, l'énergie électrique nécessaire à son fonctionnement, ou dans lequel le transpondeur est équipé d'une pile ou d'un accumulateur pour l'alimentation en énergie.

7. Système selon la revendication 3, dans lequel l'unité de commande (100) est adaptée pour identifier, sur la base des données transmises, une configuration de l'unité de base (10) comportant l'au moins un composant de système (40) disposé sur l'unité de base.

8. Système selon la revendication 1, dans lequel l'unité de base (10) comprend un chariot motorisé ou une caméra d'inspection.

9. Système selon la revendication 1, dans lequel le transpondeur (30) est disposé à l'intérieur du composant de système (40) ou dans lequel le transpondeur (30) est disposé vers l'extérieur sur le composant de système (40).

10. Procédé permettant la détermination d'une configuration d'un système d'inspection de canalisations et/ou de maintenance (1), lequel système comprend une unité de base (10) et au moins un composant de système (40) qui est disposé sur l'unité de base (10), dans lequel un transpondeur (30) lisible sans contact est disposé sur le composant de système (40) et un dispositif de lecture (20) est disposé sur l'unité de base (10),
dans lequel
- le transpondeur (30) fournit des données qui identifient le composant de système (40), et
- le dispositif de lecture (20) lit sans contact, depuis le transpondeur (30), les données fournies par le transpondeur (30).

11. Procédé selon la revendication 10, dans lequel le composant de système (40) est disposé de manière amovible sur l'unité de base (10).

12. Procédé selon la revendication 10, dans lequel le système comprend une unité de commande (100) disposée à l'extérieur de l'unité de base (10), et un dispositif de traitement de données (50) couplé au dispositif de lecture (20) est disposé sur l'unité de base (10), dans lequel le dispositif de traitement de données (50) reçoit les données reçues ou lues par le dispositif de lecture (20) et les transmet à l'unité de commande (100) par l'intermédiaire d'une liaison de communication (K).

13. Procédé selon la revendication 10, dans lequel le transpondeur (30) présente au moins un dispositif capteur (110) et/ou est couplé à au moins un dispositif capteur (110), dans lequel le transpondeur (30) fournit des données de capteur du dispositif capteur (110) et le dispositif de lecture (20) reçoit sans contact, en provenance du transpondeur (30), les données de capteur fournies par le transpondeur (30) ou lit sans contact lesdites données depuis le transpondeur (30).

14. Procédé selon la revendication 10, dans lequel le dispositif de lecture (20) alimente le transpondeur (30) en énergie électrique.

15. Procédé selon la revendication 10, dans lequel le transpondeur (30) produit, au moyen d'une technologie de récupération d'énergie, l'énergie électrique nécessaire à son fonctionnement, ou dans lequel le transpondeur est alimenté en énergie électrique à l'aide d'une pile ou d'un accumulateur.

16. Procédé selon la revendication 12, dans lequel l'unité de commande (100) identifie, sur la base des données transmises, une configuration de l'unité de base (10) comportant l'au moins un composant de système (40) disposé sur l'unité de base.
